# EUROPEAN PATENT APPLICATION

(11) **EP 1 420 377 A2**
(43) Date of publication of application: **19.05.2004**
(21) Application number: 03025725.7
(22) Date of filing: 10.11.2003
(51) Int. Cl.: G08B 13/19, G01J 5/04

(54) **Infrared detector, particularly for outdoor use**

(30) Priority: 12.11.2002 IT PD20020074
(71) Applicant: Zancan Gianfranco & C. s.a.s., 35030 Saccolongo (Prov. of Padova) (IT)
(72) Inventor: Zancan, Gianfranco, 35030 Rovolon (Prov. of Padova) (IT)
(74) Representative: Modiano, Guido, Dr.-Ing.

(57) **Abstract**

An infrared detector, particularly for outdoors, comprising an electronic management and control unit (12) to which two infrared field detection sensors (13) are functionally connected, both sensors being able to swivel by way of articulation means substantially through an angle of more than 90°; the electronic unit (12) and the two detection sensors (13) are associated with an electrical accumulator that is coupled to a photovoltaic panel (20); the electronic unit (12) is further associated with a radio transmitter for transmitting the infrared field variation signal.

## Description

The present invention relates to an infrared detector, particularly for outdoor use.

In recent years there has been an increase in the use of remote detectors for the most disparate applications, from the automatic switching of lights to the automation of the opening and closing of faucets to intrusion alarm systems.

There is an extreme variety of detector types based on different physical principles; the several sensors for remote detection can include for example laser sensors, photoelectric sensors, microwave sensors or infrared sensors.

As regards infrared sensors, they can all be traced back to a common operating method.

The electronic component used by infrared sensors is known as a pyroelectric sensor and "reacts" to sudden variations in the infrared radiation field generated by a body, such as for example the field generated by the heat produced by the human body.

The human body emits infrared radiation with a frequency between 7000 and 14000 nanometers.

The pyroelectric sensor is located behind a particular Fresnel lens, which focuses a beam of infrared radiation of a certain stable infrared range toward said pyroelectric sensor.

As an alternative, there are infrared sensors in which the pyroelectric sensor is located at the center of a mirror-like focusing element, which collects the infrared radiation beam and redirects it to said pyroelectric sensor.

The passage of a "warm" body through the infrared radiation beam "covered" by the lens (or by the mirror-like focusing element) produces a sudden increase in temperature and a consequent variation in the infrared field, which is detected by the pyroelectric sensor, which accordingly sends a signal to an electronic control and management unit, such as for example a control unit for switching on automatically the light inside a certain room.

The devices that use these sensors are generally constituted by a single sensor coupled to a single lens that transmits the signals to an electronic control and management unit.

Generally, this lens can be swiveled about a certain axis so that it can be orientated conveniently in the direction of interest once the device has been fixed to a supporting structure.

The detected infrared field variation signals are sent to the electronic control unit, which converts them into adapted further signals to be sent to a user device, such as for example an acoustic intrusion alarm.

These further signals are generally sent to the user device over wires, but indoor detectors are also known which use radio transmission of the signals.

The electric power supply of these devices is generally drawn from the national electric grid, but battery-powered devices are also known.

Although they have been used for considerable time, these infrared detector devices suffer from drawbacks.

Especially in the case of infrared detectors to be used outdoors, the installation of said devices is in fact extremely laborious.

It is in fact necessary to carry the power supply cables and the signal transmission cables from the outdoor area where the detector device is applied (typically a wall of a building or a column) to an electric power supply control unit and to a user device, which may be located far from the region where the detector device is applied.

Moreover, when it is necessary to monitor a perimeter, it is necessary to have substantially one device for each side of the perimeter to be monitored.

This occurs because the sensor of the device is sensitive only on the longitudinal portion of the perimeter in front of the sensor or possibly on a conical portion that lies in front of it, and therefore it is not capable, for example, of covering the region identified by a convex comer of a building.

For this reason, more than one device is needed for example to monitor a region formed by the extension of two walls that form a corner.

Moreover, once a detector device has been installed, it is possible to adjust the orientation of the sensors at most at an angle of no more than 90°.

In this way, it is not possible to orientate the sensor at a later time along a direction that was deemed unimportant at the time of installation.

Moreover, if the detector devices are battery-powered (to avoid therefore the problem of installing the power supply cable), there is still the problem of periodic battery replacement.

The aim of the present invention is to provide an infrared detector, particularly for outdoors, that eliminates the above-noted drawbacks of the prior art.

Within this aim, an object of the present invention is to provide an infrared detector, particularly for outdoors, that is easy and inexpensive to install.

Another object of the present invention is to provide an infrared detector, particularly for outdoors, that allows to control broad perimetric spaces.

Another object of the present invention is to provide an infrared detector, particularly for outdoors, that does not require maintenance.

Another object of the present invention is to provide an infrared detector, particularly for outdoors, that can be manufactured with conventional systems and technologies.

This aim and these and other objects that will become better apparent hereinafter are achieved by an infrared detector, particularly for outdoors, characterized in that it comprises an electronic management and control unit to which at least two infrared field detection sensors are functionally connected, both sensors being able to swivel by way of articulation means substantially through an angle of more than 90°, said electronic unit and said at least two detection sensors being associated with an electrical accumulator that is coupled to at least one photovoltaic panel, said electronic unit being further associated with a radio transmitter.

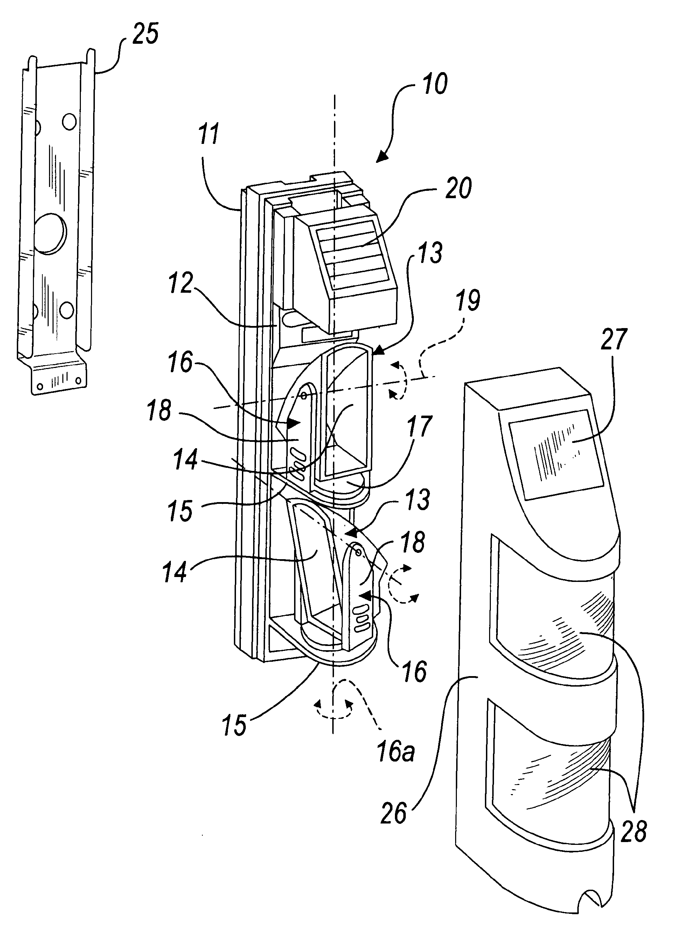

Further characteristics and advantages of the present invention will become better apparent from the following detailed description of a preferred but not exclusive embodiment thereof, illustrated by way of nonlimiting example in the accompanying drawing, wherein the only figure is an exploded perspective view of the detector according to the invention.

With reference to the figure, an infrared detector according to the invention is generally designated by the reference numeral 10.

Such detector 10 comprises, on a supporting plate 11, an electronic management and control unit 12 to which at least two infrared field detection sensors 13 are functionally connected.

Each sensor 13 is formed by a single-beam mirror-type focusing element 14.

A pyroelectric sensor (not shown in the figure), for example of the preamplified type, is present inside each mirror element 14.

The pyroelectric sensor is functionally connected to the electronic unit 12.

The sensors 13 are fitted, by way of respective articulation means, on supports 15, which are mounted in a cantilevered fashion with respect to the plate 11.

In particular, such sensors 13 are arranged substantially in series to each other with respect to the longitudinal extension of the plate 11.

Such articulation means are constituted by a fork-like body 16, which allows the corresponding sensor 13 to be swiveled through 180° about a first axis 16a that is perpendicular to the supports 15.

Each fork body 16 is formed by a base 17, which rests on the corresponding support 15 and is pivoted thereto about the axis 16a, and by two mutually opposite arms 18, which cantilever out from the base 17.

The sensor 13 is pivoted to the arms 18 about a second axis 19 that is perpendicular to the axis 16.

In this manner, the sensor 13 can also be swiveled through approximately 15° about the axis 19.

The electronic unit 12 and the two detection sensors 13 are associated with an electric accumulator (not shown in the figure), which in turn is coupled to a photovoltaic panel 20, such as for example a solar cell of a per se known type.

The electric accumulator comprises, for example, a nickel-metal hydride battery.

The photovoltaic panel 20 allows to recharge the electric accumulator.

Moreover, the electronic unit is associated with a radio transmitter (not shown in the figure), which allows remote communication of the signal that detects a variation of the infrared field with a receiving control unit.

The plate 11 can be fixed to a support, such as for example a wall, by means of a bracket 25.

The sensors 13 and the photovoltaic panel 20 are surrounded by a protective enclosure 26, which in any case has a first transparent portion 27, arranged in front of the panel 20, and two second transparent portions 28, which are arranged in front of the regions occupied by the sensors 13.

By programming the electronic unit 12 appropriately, it is possible to make each sensor 13 operate independently of the other (OR function), thus obtaining two separate controls.

Likewise, it is also possible to make the sensors 13 operate in a combined manner (AND function).

In practice it has been found that the invention thus described solves the drawbacks noted in conventional infrared detectors; in particular, the present invention provides an infrared detector, particularly for outdoors, that is easy and inexpensive to install.

There is in fact no need to install power supply cables and transmission cables.

The signals are transmitted to a user device by radio, while electric power is supplied by means of a battery that can be recharged by the solar energy accumulated and converted by the photovoltaic panel.

Moreover, the present invention provides an infrared detector, particularly for outdoors, that allows to monitor large perimetric spaces.

The use of two sensors in fact allows to monitor two separate longitudinal portions of perimeter; moreover, the broad swiveling ability of the sensors allows an extremely broad choice of the orientation of the monitored regions.

The materials employed, so long as they are compatible with the specific use, as well as the dimensions, may be any according to requirements and to the state of the art.

The disclosures in Italian Utility Model Application No. PD2002U000074 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An infrared detector, particularly for outdoors, **characterized in that** it comprises an electronic management and control unit (12) to which at least two infrared field detection sensors (13) are functionally connected, both sensors being able to swivel by way of articulation means substantially through an angle of more than 90°, said electronic unit (12) and said at least two detection sensors (13) being associated with an electrical accumulator that is coupled to at least one photovoltaic panel (20), said electronic unit (12) being further associated with a radio transmitter.

2. The infrared detector according to claim 1, **characterized in that** said at least two sensors (13) comprise a single-beam mirror-type focusing element (14) and a pyroelectric sensor of the preamplified type.

3. The infrared detector according to one or more of the preceding claims, **characterized in that** it comprises a supporting plate (11) for said electronic management and control unit and for said photovoltaic panel (20), supports (15) being mounted in a cantilevered arrangement on said plate (11) substantially in series to each other with respect to the longitudinal extension of said plate (11), said at least two sensors (13) being in turn mounted on said supports (15) by way of said articulation means.

4. The infrared detector according to one or more of the preceding claims, **characterized in that** said articulation means comprise, for each one of said sensors (13), a fork-like body (16), which is formed by a base (17) that is pivoted to said corresponding support (15) about a first axis (16a) that is perpendicular to said support (15) and by two mutually opposite arms (18) that cantilever out from said base (17) and on which said sensor (13) is pivoted about an axis (19) that is perpendicular to said first axis (16a), said sensor (13) being able to swivel substantially through 180° about said first axis (16a) and substantially through 15° about said second axis (19).

5. The infrared detector according to one or more of the preceding claims, **characterized in that** said electric accumulator comprises a nickel-metal hydride battery.

6. The infrared detector according to one or more of the preceding claims, **characterized in that** said sensors (13) and said photovoltaic panel (20) are surrounded by a protective enclosure (26), which has a first transparent portion (27) arranged in front of said photovoltaic panel (20) and two second transparent portions (28) arranged in front of the regions occupied by said sensors (13).
